# EUROPEAN PATENT APPLICATION

(11) **EP 2 204 591 A1**
(43) Date of publication of application: **07.07.2010**
(21) Application number: 09005518.7
(22) Date of filing: 20.04.2009
(51) Int. Cl.: F16D 69/04, F16D 65/092

(54) **Braking device with toothed backing plate.**

(30) Priority: 06.01.2009 TW 98200114 U
(71) Applicant: SHIN IN TRADING CO., LTD., Taipey County 208 T'ai pei (TW)
(72) Inventor: Chen, Kuo-Shong, Taipei County 208 (TW)
(74) Representative: Statti, Francesco

(57) **Abstract**

A braking device includes a backing plate (21), on one face thereof a plurality of projected teeth (25) are formed by punching, and a friction material (23) being attached to the toothed face of the backing plate with the projected teeth stabbed and embedded in the friction material. With the projected teeth formed on the face of the backing plate, the friction material can be tightly held to the backing plate without easily displaced from the backing plate due to frictional contact with a quickly rotating brake disc. Meanwhile, with the projected teeth formed on the face of the backing plate, the binding glue that applies between the backing plate and the friction material for binding each other can be reduced or cancelled.

## Description

### Detailed description of the invention

### Field of the invention

The present invention relates to a braking device, and more particularly to a braking device with a toothed backing plate.

### Background of the invention

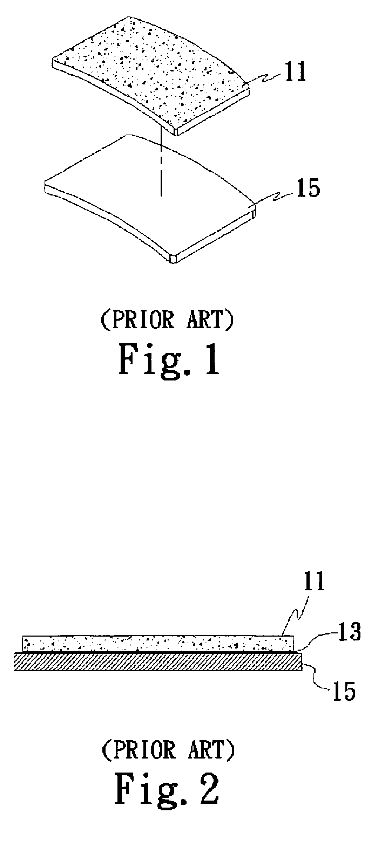

Conventionally, a braking device includes a friction material (11) and a backing plate (15) as shown in Fig. 1. The friction material (11) is made of a material with a high friction coefficient, such as nickel, iron, aluminum, rubber, leather, etc., to produce a relatively high friction force. As shown in Fig. 2, the friction material (11) is bound to the backing plate (15) simply by a layer of binding glue (13) applied to one face of the backing plate (15). The binding glue (13) is usually a synthetic resin material. Since only the binding glue (13) is used to bind the friction material (11) and the backing plate (15), it is necessary to leave the glue-bound friction material (11) and backing plate (15) for a long period of time, allowing the binding glue (13) to dry naturally to thereby increase its binding strength for the friction material (11) to firmly attach to the backing plate (15) in order to form the conventional backing device. Consequently, the manufacturing process of the conventional braking device is not only time-consuming but also environment-friendly with using a large amount of binding glue.

In a brake system, when one or more pairs of friction materials or brake linings are caused to tightly clamp on brake discs, brake drums, or other rotatable objects, which rotate along with a rotating system, a braking force is produced. A large amount of heat will be produced when the above-described braking manner utilizing friction force is employed. To enable quick dissipation of the produced waste heat, a backing plate with good heat dissipation efficiency is highly emphasized in the conventional brake techniques to ensure highly stable operation of the brake system. In the conventional brake system, the produced high heat is transferred from the friction material (11) to the backing plate (15) via the binding glue (13), and the binding glue (13) is subject to qualitative change under high temperature and would become softened accordingly. Once the binding glue (13) becomes softened, the binding strength between the friction material (11) and the backing plate (15) will decrease to result in displacement of the friction material from the backing plate (15) and then affect the stable operation of the brake system adversely.

In a result, there are certain disadvantages in the application of the conventional device. It takes a lot of time in the gluing process, and the binding glue layer in high temperature is unstable which causes the qualitative change.

The inventor has therefore tried to develop a braking device with a toothed backing plate, so that a friction material of the braking device can be firmly held to the backing plate thereof via a plurality of projected teeth formed on one face of the backing plate with only a small amount of binding glue or even without any binding glue.

### Summary of the invention

A primary object of the present invention is to provide a braking device that enables enhanced binding strength between a backing plate and a friction material thereof while reducing or even omitting the use of binding glue between the two parts.

To achieve the above object, the braking device according to an embodiment of the present invention includes a backing plate, on one face thereof a plurality of projected teeth is formed; and a friction material being fixedly held to the backing plate with the projected teeth stabbed into and embedded in the friction material. Besides, the backing plate can be formed by punching.

Another object of the present invention is to provide a projected tooth structure that is helpful in firmly holding a friction material to a backing plate of a braking device.

To achieve the above object, in a braking device according to the present invention, a plurality of projected teeth is formed on one face of a backing plate of the braking device and arrayed into a plurality of rows, and the projected teeth in two adjacent rows are arranged in staggered relation.

In an operable embodiment, the projected teeth in two adjacent rows are staggered by a distance of one half of a pitch between two successive teeth in any row. In additon, in another operable embodiment, the projected teeth in two adjacent rows are not staggered.

In a further operable embodiment, the projected teeth formed on the face of the backing plate are oriented to different directions.

In a still further operable embodiment, the projected teeth formed on the face of the backing plate have an inclination angle with the backing plate. Further, the inclination angle is preferable ranged from 10 to 150 degrees.

In an embodiment of the present invention, the backing plate is made of a metal material.

In an embodiment of the present invention, a binding glue layer can be applied between the backing plate and the friction material.

Further, the braking device with a toothed backing plate according to the present invention can be applied to a bicycle brake system.

In brief, in the braking device of the present invention, with the projected teeth formed on one face of the backing plate, the friction material can be firmly and fixedly held to the backing plate to prevent the displacement from the backing plate due to frictional contact with a brake disc rotating at high speed. Moreover, with the provision of the projected teeth, only a small amount of binding glue or even none is needed for firmly binding the friction material to the backing plate.

### Brief description of the drawings

The structure and the technical means adopted by the present invention to achieve the above and other objects can be best understood by referring to the following detailed description of the preferred embodiments and the accompanying drawings, wherein

Fig. 1 is an exploded perspective view of a conventional braking device;

Fig. 2 is an assembled sectional view of Fig. 1;

Fig. 3 is an exploded perspective view of a braking device with toothed backing plate according to a first preferred embodiment of the present invention;

Fig. 4 is an assembled phantom view of Fig. 3;

Fig. 5 is a cross-sectional view taken along line A-A' of Fig. 4;

Fig. 6 is a longitudinal sectional view taken along line B-B' of Fig. 4;

Fig. 7 is a sectional view showing the use of the braking device of the present invention in a disc brake system;

Fig. 8 is a cross-sectional view of a braking device with toothed backing plate according to the second embodiment of the present invention;

Fig. 9 is a cross-sectional view of a braking device with toothed backing plate according to the third embodiment of the present invention;

Fig. 10 shows the inclination angle of the first type of tooth formed on the backing plate of the braking device of the present invention; and

Fig. (11) shows the inclination angle of the second type of tooth formed on the backing plate of the braking device of the present invention.

### Detailed description of the preferred embodiments

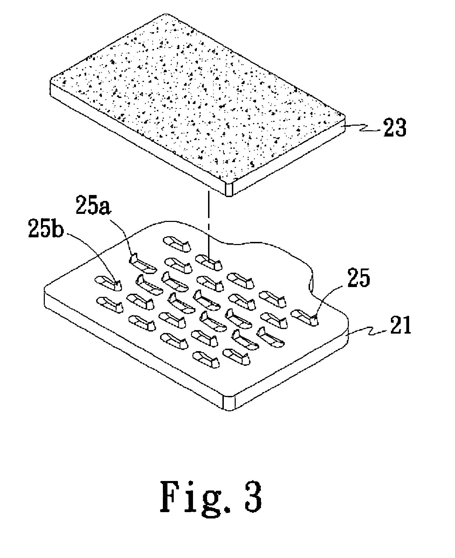

Please refer to Fig. 3 that is an exploded perspective view of a braking device with toothed backing plate according to the first preferred embodiment of the present invention. As shown, the braking device of the present invention includes one backing plate (21) and one friction material (23). The backing plate (21) can be made of a metal material, such as a stainless steel alloy material or an aluminum material. The backing plate (21) can be used to fix the friction material (23), so that the braking power transmitted by a brake system is applied via the friction material (23) to a rotating object or a moving object to thereby stop or slow the rotation or the movement of the object.

As shown in Fig. 3, the characteristic of the braking device of the present invention is that a plurality of projected teeth (25) is formed on one face of the backing plate (21) by the way of punching. These projected teeth (25) are stabbed and embedded in the friction material (23) to enhance the attachment strength of the friction material (23) to the backing plate (21). With the projected teeth (25), the binding glue that is required in the conventional braking device for applying between the backing plate and the friction material can be largely reduced. Moreover, for the brake system that requires only a relatively low brake performance, such as the brake system for a low-speed bicycle, the binding glue can be even canceled. That is, for a bicycle brake system, the braking device of the present invention can be used as a brake lining.

The projected teeth (25) formed on one face of the backing plate (21) are arrayed into a plurality of rows. For example, in Fig. 3, there are rows of teeth (25a) and rows of teeth (25b). In the preferred embodiment, the projected teeth in two adjacent rows are arranged in staggered relation, so as to further enhance a binding strength between the backing plate (21) and the friction material (23). Preferably, the projected teeth (25) are formed by punching from one side of the backing plate (21) in at least two different angular directions. In the illustrated first preferred embodiment, the projected teeth (25) are formed by punching in two different angular directions. That is, the projected teeth (25a) and the projected teeth (25b) are separately formed by punching in two different angular directions. There is an inclination angle between each of the projected teeth (25) and the face of the backing plate (21), and different inclination angles can be obtained from the projected teeth (25) by punching in different angular directions. By forming the projected teeth (25) having different inclination angles, the friction material (23) can be more firmly attached to the backing plate (21). This will be described in more details with references to the drawings hereinafter.

The first step in the manufacturing procedure of the braking device with toothed backing plate of the present invention is to clean the back plate (21) and remove its surface dirt therefrom. Then, perform the punching process to form a plurality of projected teeth (25) on one face of the backing plate (21). In this step, desired inclination directions and angles for the projected teeth (25) are determined. Thereafter, a powdered raw material for forming the friction material (23) is applied over the face of the backing plate (21) with the projected teeth (25). The raw material for the friction material (23) may contain graphite, chromium hemitrioxide, silicon dioxide, and other metal compounds, which are known in the art. Finally, the backing plate (21) with the raw material for the friction material (23) is applied on one face thereof is subjected to pressure and heat in a forming process, so that the friction material (23) is formed and tightly attached to the toothed face of the backing plate (21).

As having been mentioned above, before forming of the friction material (23) on the backing plate (21), the process of applying a layer of binding glue on the toothed face of the backing plate (21) can be added. The binding glue layer can be a known synthetic resin. When the braking device of the present invention is subjected to pressure and heat in the forming process, the binding glue layer will first become molten and then cured to increase the binding strength between the friction material (23) and the backing plate (21). However, it does not include the process of applying the binding glue layer in the manufacturing of the illustrated preferred embodiment of the present invention.

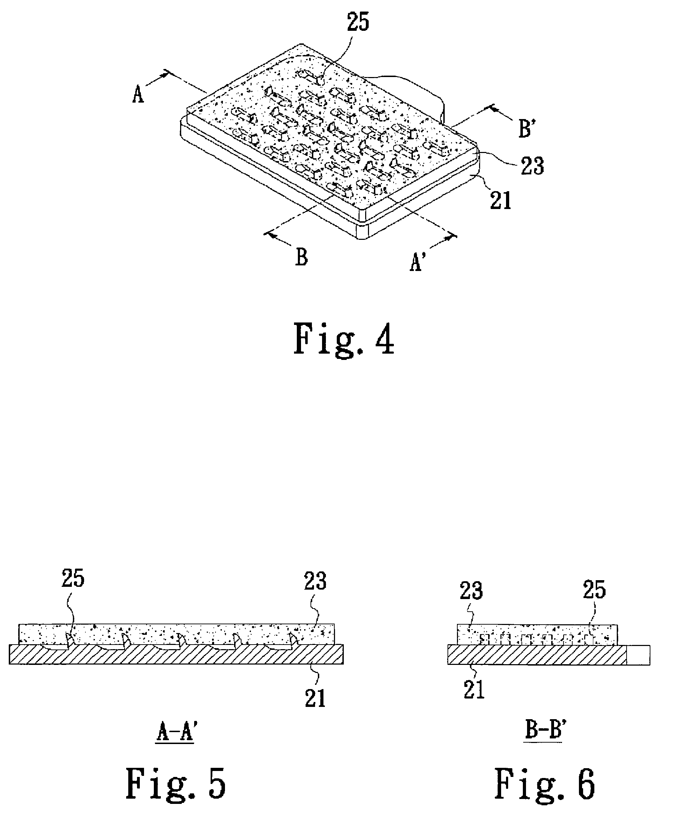

Please refer to Fig. 4 that is an assembled phantom view of the braking device according to the first preferred embodiment of the present invention. As shown, after the braking device with toothed backing plate is formed, the projected teeth (25) will be stabbed and embedded in the friction material (23), so that the friction material (23) is fixedly held to the toothed face of the backing plate (21).

Fig. 5 is a cross-sectional view taken along line A-A' of Fig. 4, and Fig. 6 is a longitudinal sectional view taken along line B-B' of Fig. 4. From Fig. 5, it can be clearly seen the projected teeth (25) are stabbed and embedded in the friction material (23) with an inclination angle contained between each of the projected teeth (25) and the face of the backing plate (21). Furthermore, from Fig. 6, it can be seen that the projected teeth (25) on the backing plate (21) are arranged into a plurality of rows.

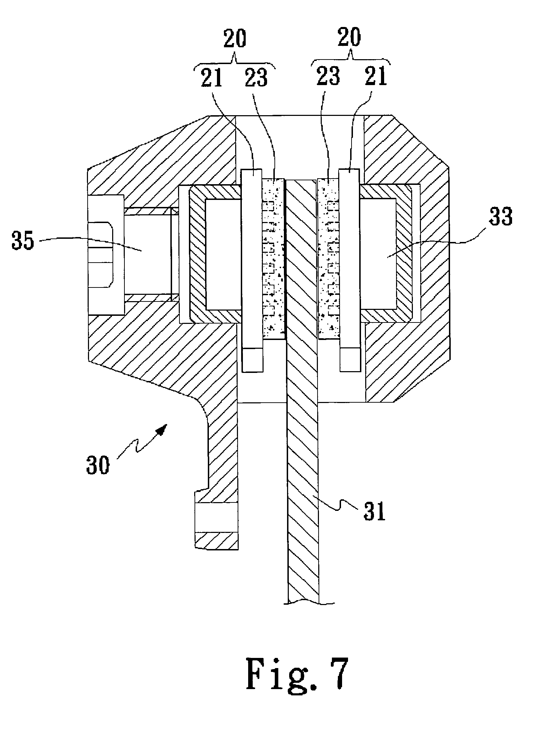

Fig. 7 is a sectional view showing the use of the braking device of the present invention in a disc brake system (30). The disc brake system (30) includes a brake disc (31), a push unit (33), an oil-pressure piston (35), and two braking devices (20). Through cooperative operation of the oil-pressure piston (35) with the push unit (33), the two braking devices (20) are moved toward each other to tightly clamp on two opposite sides of the disc brake (31) and thereby stop or slow the rotation of the brake disc (31). In the present invention, since the friction material (23) is tightly attached to the toothed face of the backing plate (21), the friction material (23) would not displace to adversely affect the brake performance when the braking devices (20) are in frictional contact with the quickly rotating brake disc (31) and a large amount of heat is produced. With the great brake performance under high-speed friction, adding the binding glue layer between the backing plate (21) and the friction material (23) can ensure further enhanced attachment of the friction material (23) to the backing plate (21) and provide a better stability. For example, with the conventional braking device, a friction material of 10 cm² in area would require at least 10 ml of binding glue to firmly bind to the backing plate. However, with the braking device having a toothed backing plate according to the present invention, the amount of binding glue for the friction material (23) having the same area of 10 cm² can be reduced to less than 5 ml to obtain the same binding strength as that of the conventional braking device. That is, with the present invention, the amount of binding glue can be reduced. However, when the braking device of the present invention includes an increased amount of binding glue, a much higher and stable binding strength can be achieved between the backing plate (21) and the friction material (23), making the present invention suitable for use in a brake system requiring very high braking performance.

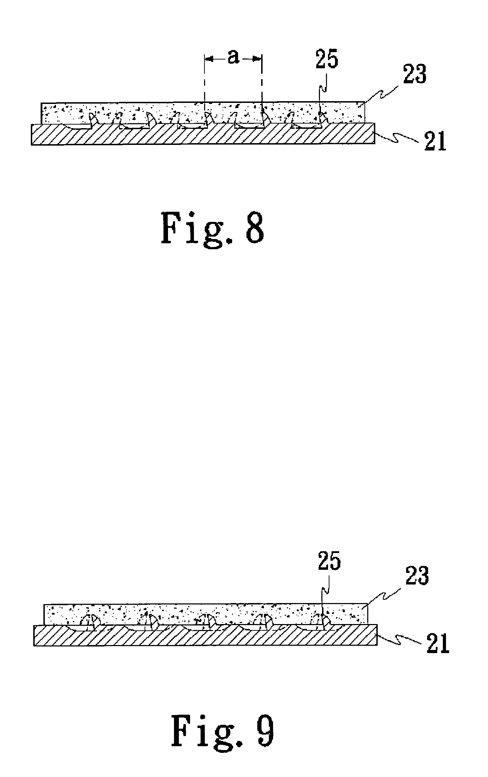

In the present invention, the projected teeth (25) in two adjacent rows can be staggered by different distances. In Fig. 8, which is a cross-sectional view similar to that taken along line A-A' of Fig. 4 but showing a braking device according to a second embodiment of the present invention, the projected teeth (25) in the adjoining rows are staggered by a distance of one half of a pitch "a" between two successive teeth (25) in any row, that is, a/2. Further, in Fig. 9, which is a cross-sectional view showing a braking device according to a third embodiment of the present invention, the projected teeth (25) in the adjoining rows are not staggered by a small distance close to zero. In Fig. 9, it also means that the projected teeth (25) in the adjoining rows are not staggered.

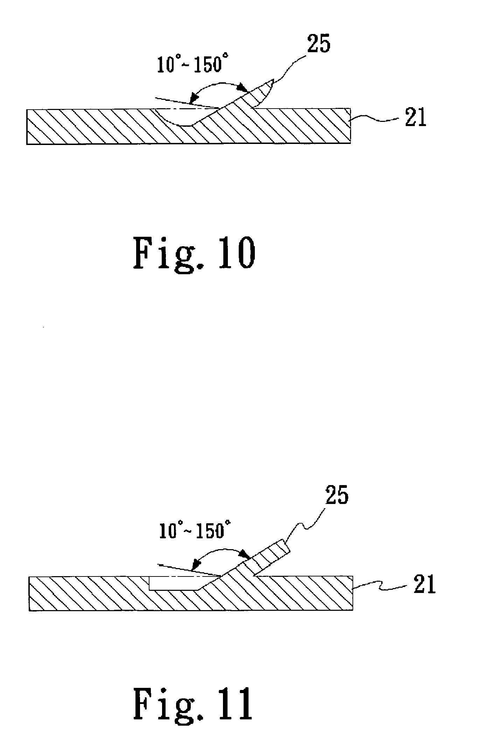

Both Figs. 10 and 11 show the inclination of a first type and a second type of the teeth, respectively, formed on the backing plate (21) of the braking device of the present invention. As mentioned above, the projected teeth (25) and the face of the backing plate (21) would contain an inclination angle, which can be in the range from 10 to 150 degrees. As shown in Figs. 10 and 11, the projected teeth (25) are portions projected from one face of the backing plate (21). In the first type thereof, the projected teeth (25) each have a pointed free end. Furthermore, in the second type thereof, the projected teeth (25) have a substantially flat free end. It is understood, the projected teeth (25) can also be formed with other differently shaped free ends through different forming manners.

In brief, with the projected teeth (25) formed on one face of the backing plate (21), the friction material (23) can be firmly and fixedly held to the backing plate (21) without easily becoming displaced from the backing plate (21) due to frictional contact with a brake disc rotating at high speed. Moreover, with the provision of the projected teeth (25), only a small amount or even no amount of binding glue is needed for binding the friction material (23) to the backing plate (21).

The present invention has been described with some preferred embodiments thereof and it is understood that many changes and modifications in the described embodiments can be carried out without departing from the scope and the spirit of the invention that is intended to be limited only by the appended claims.

## Claims

1. A braking device with toothed backing plate, comprising:
a backing plate being formed on one face thereof with a plurality of projected teeth; and
a friction material being attached to the toothed face of the backing plate with the projected teeth stabbed and embedded in the friction material.

2. The braking device with toothed backing plate as claimed in claim 1, wherein the backing plate is punched to form on one face thereof with a plurality of projected teeth.

3. The braking device with toothed backing plate as claimed in claim 1, wherein the projected teeth are arrayed into a plurality of rows on the face of the backing plate.

4. The braking device with toothed backing plate as claimed in claim 3, wherein the projected teeth in any two adjacent rows are arranged in staggered relation.

5. The braking device with toothed backing plate as claimed in claim 4, wherein the projected teeth in any two adjacent rows are staggered by a distance of one half of a pitch between two successive teeth in any row.

6. The braking device with toothed backing plate as claimed in claim 4, wherein the projected teeth in any two adjacent rows are not staggered.

7. The braking device with toothed backing plate as claimed in claim 1, wherein the projected teeth formed on the face of the backing plate are oriented in different directions.

8. The braking device with toothed backing plate as claimed in claim 1, wherein the projected teeth formed on the face of the backing plate have an inclination angle with the backing plate.

9. The braking device with toothed backing plate as claimed in claim 7, wherein the inclination angle is ranged from 10 to 150 degrees.

10. The braking device with toothed backing plate as claimed in claim 1, wherein the backing plate is a metal plate.

11. The braking device with toothed backing plate as claimed in claim 1, further comprising a binding glue layer applied between the backing plate and the friction material.

12. The braking device with toothed backing plate as claimed in claim 1, wherein the braking device is applicable to a bicycle brake system.
